# EUROPEAN PATENT SPECIFICATION

(11) **EP 4 396 780 B1**
(45) Date of publication and mention of the grant of the patent: **25.02.2026**
(21) Application number: 22840510.6
(22) Date of filing: 21.11.2022
(51) Int. Cl.: G06T 7/80

(54) **SYSTEM AND METHOD FOR OFFLINE CALIBRATION OF A MOTION-TRACKING DEVICE**
SYSTEM UND VERFAHREN ZUR OFFLINE-KALIBRIERUNG EINER BEWEGUNGSVERFOLGUNGSVORRICHTUNG
SYSTÈME ET PROCÉDÉ D'ÉTALONNAGE HORS LIGNE D'UN DISPOSITIF DE SUIVI DE MOUVEMENT

(43) Date of publication of application: 10.07.2024
(73) Proprietor: Google LLC, Mountain View, CA 94043 (US)
(72) Inventor: WU, Hao, Mountain View, California 94043 (US); JIA, Zhiheng, Mountain View, California 94043 (US); ZHANG, Qiyue, Mountain View, California 94043 (US); GUO, Chao, Mountain View, California 94043 (US)
(74) Representative: Maikowski & Ninnemann Patentanwälte Partnerschaft mbB
(86) International application number: PCT/US2022/080234
(87) International publication number: WO 2024/112351

(56) References cited:
- US-A1- 2021 225 035
- JEROEN D. HOL ET AL: "Modeling and Calibration of Inertial and Vision Sensors", THE INTERNATIONAL JOURNAL OF ROBOTICS RESEARCH, vol. 29, no. 2-3, February 2010 (2010-02-01), pages 231 - 244, XP055384922, DOI: 10.1177/0278364909356812

## Description

### FIELD OF THE DISCLOSURE

The present disclosure relates to a device that includes a position sensor for motion tracking, and more specifically, to a method for calibrating the position sensor during periods of inactivity.

### BACKGROUND

A mobile computing device can be configured to measure and track its motion using an inertial measurement unit (IMU). The IMU includes three gyroscopes configured to measure angular rates (i.e., rotations) in three dimensions and may further include three accelerometers configured to measure linear accelerations in three dimensions based on a force exerted by gravity. The three rotations and the three accelerations may be used to track motion with six degrees of freedom (6DOF). For example, the IMU may help track the motion of a head-worn device to enable an augmented reality (AR) experience or virtual reality (VR) experience, and the accuracy of the motion tracking may correspond to the realism of this experience. US 2021/225035 A1 describes a system and a method for imaging system calibration, including determination of a dense correspondence map matching features in a first image to features in a second image, and determination of updated calibration pictures associated with an image acquisition system based on the matching features. Furthermore, Jeroen et al. discuss "Modeling and Calibration of Inertial and Vision Sensors" in The International Journal of Robotics Research, vol. 29, no. 2-3, February 2010 (2010-02), pages 231-244, XP055384922.

### SUMMARY

The present invention is set out in the appended claims. Roughly speaking, a motion-tracking device may include an IMU and a camera to sense (i.e., track) the motion of a user wearing or holding the motion tracking device. The IMU may generate IMU data that includes IMU errors so that the IMU does not perfectly measure (i.e., inaccurately measures) the physical movements of the motion-tracking device. These IMU errors can be caused by imperfections (e.g., physical defects and/or deformations and/or electrical deviations) in the sensors (e.g., gyroscope, accelerometer) of the IMU. Likewise, the camera in the motion-tracking device may capture camera images that include camera errors (e.g., misalignments, distortions) so that the camera does not perfectly measure the physical movements of the motion tracking device. The present disclosure describes systems and methods to determine (i.e., optimize) a set of calibration parameters that includes intrinsic parameters of the IMU (i.e., IMU intrinsics) and the camera (i.e., camera intrinsics), which after being determined, can correct (i.e., compensate for) the errors in their respective measurements. Additionally, the set of calibration parameters includes extrinsic parameters of the IMU and the camera (i.e., IMU-camera extrinsics), which after being determined, can allow for movements measured each to be related to a common frame of reference of the motion-tracking device so that a motion of the motion-tracking device can be computed more accurately.

In some aspects, the techniques described herein relate to a method according to claim 1.

In some aspects, the techniques described herein relate to a motion-tracking device according to claim 14.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

FIG. 1 is a system block diagram of a motion-tracking device according to a possible implementation of the present disclosure.
FIG. 2 illustrates camera images captured by a camera for a motion tracking process according to a possible implementation of the present disclosure.
FIG. 3 is a system block diagram of an IMU according to a possible implementation of the present disclosure.
FIG. 4 is a perspective view of a motion-tracking device implemented as AR glasses according to a possible implementation of the present disclosure.
FIG. 5 illustrates relative IMU-camera extrinsics according to a possible implementation of the present disclosure.
FIG. 6 is a flow chart of a method for determining a set of calibration parameters for a motion tracking process according to an implementation of the present disclosure.
FIG. 7 is a flow chart of a method for optimizing the set of calibration parameters according to a possible implementation of the present disclosure.

The components in the drawings are not necessarily to scale relative to each other. Like reference numerals designate corresponding parts throughout the several views.

### DETAILED DESCRIPTION

A motion-tracking device may be worn or otherwise held by a user to sense and monitor (e.g., track) movement of the user. The movement may be used to interact with an application running on the motion-tracking device. For example, an augmented reality (AR) application or virtual reality (VR) application may be controlled or otherwise respond to the motion detected by the motion tracking device. Accurately sensing the movement of the motion-tracking device may be desirable for providing a satisfying AR or VR experience. The accuracy, however, may be reduced due to variations in the operation and/or positioning of the sensors used for detecting and measuring movement. Compensating for these variations may require calibration, which is problematic because the compensation required can be different for each motion-tracking device, can change over time (e.g., with use), and can change for different environments (e.g., temperature). Systems and methods are described herein that address these problems by calibrating (i.e., adjusting calibration parameters for) the motion-tracking device during periods in which the motion-tracking device is idle (e.g., overnight). The disclosed approach may have the advantage of maintaining an accuracy of a motion-tracking process over time without significant impact on a user experience.

A motion-tracking device may include sensors to detect movements in three dimensions (e.g., X, Y, Z). The sensors may include an inertial measurement unit (IMU) for measuring movement (e.g., rotation and displacement) through electrical signal processing. The IMU may have intrinsic properties related to its performance (i.e., related to its ability to accurately measure motion). Generally speaking, intrinsic properties (i.e., intrinsics) of a device may include a characteristic of its operation and/or a characteristic of a signal it generates. The intrinsic properties of the IMU (i.e., IMU intrinsics) can include a bias (in three dimensions) related to an offset in an amplitude of an IMU measurement from its actual value, a misalignment (in three dimensions) related to an offset in a direction of an IMU measurement from its actual value, and a scale (in three dimensions) related to how much output is generated by an input.

The sensors may further include a camera for measuring movement (e.g., rotation and displacement) through image processing. The camera may have intrinsic properties related to its ability to accurately capture images, which can affect its ability to accurately measure motion. The intrinsic properties of the camera (i.e., camera intrinsics) can include a focal length related to the focusing optics of the camera, a principal point related to the intersection between the pixels and the principal axis (i.e., optical axis) of the focusing optics of the camera, and an image distortion (i.e., distortion) related to the curving of otherwise straight lines in an image.

A motion-tracking process may include compensating for errors in the IMU data and the camera data used for computing the motion of the motion-tracking device. The error compensation may include compensating for IMU errors in IMU data using calibration parameters for the IMU intrinsics. A calibration parameter may a value for a measurement or operating characteristic that can be used to compensate for an error in the measurement or operating characteristic. For example, a bias present in an IMU measurement can be reduced, or removed, when an estimate of the bias is known. In other words, the IMU measurement may be corrected based on the estimated bias. The error compensation may further include compensating for camera errors in camera images using calibration parameters for the camera intrinsics. For example, corrected camera images (i.e., corrected images) can be generated by removing an estimated distortion for the camera. Accordingly, the error compensation may receive IMU and camera intrinsics (i.e., IMU-camera intrinsics) in order to generate corrected IMU data and corrected images for computing the motion of the device.

The IMU and the camera may have extrinsic properties related to a physical relationship between the IMU and the camera (i.e., IMU-camera extrinsics). Generally speaking, extrinsic properties (i.e., extrinsics) of two devices may include a property that depends on a relationship between the two devices. For example, the IMU-camera extrinsics may include a pose transformation between an IMU pose and a camera pose, where a pose includes a position (e.g., displacement) and orientation (e.g., rotation) relative to a coordinate system. Computing the motion of the motion tracking device may require using the IMU data and camera data together. Accordingly, the motion-tracking process may receive IMU-camera extrinsics for relating data from IMU to the camera (and vice versa).

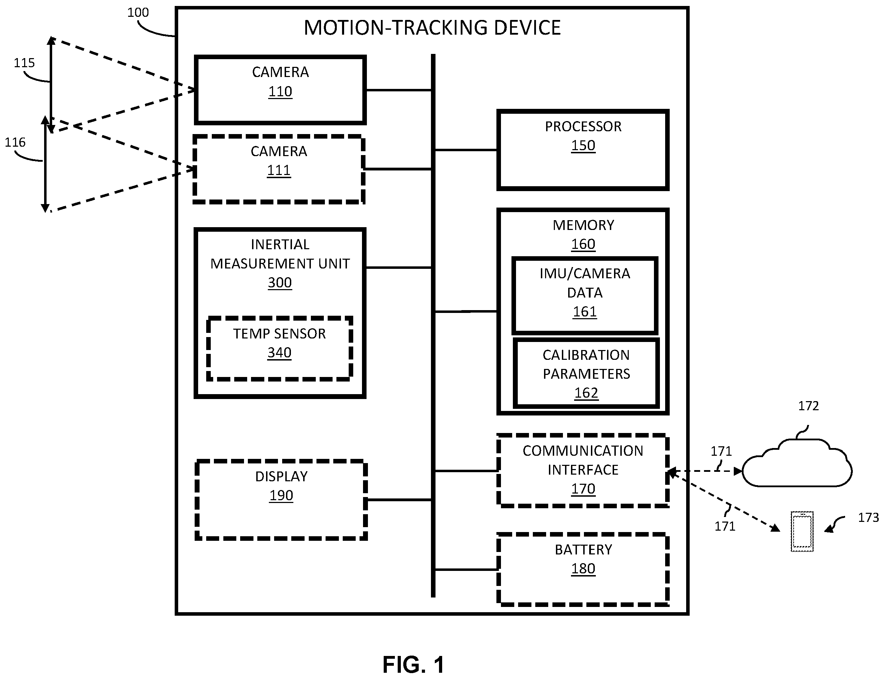

FIG. 1 is a block diagram of a motion-tracking device according to a possible implementation of the present disclosure. The motion-tracking device 100 includes a camera (e.g., first camera 110) configured to capture images of a field-of-view (e.g., first field-of-view 115). The motion-tracking device may further include a processor 150, and images from the first camera 110 may be analyzed by the processor to identify one or more features in the images for motion tracking. Tracking pixel positions of the one or more features over consecutive images may help to determine a motion (e.g., rotation) of the motion-tracking device 100. For example, the camera 110 may be configured to collect a plurality of images over a period. A processor 150 of the motion-tracking device may be configured to analyze the images to determine if the motion-tracking device is stationary/moving and/or how long the motion-tracking device has been stationary/moving. In a possible implementation, an idle state (i.e., stationary state) of the motion-tracking device 100 may be detected when no movement is detected in the images for a period (e.g., longer than a threshold period). An idle state may be defined generally as the condition in which the motion-tracking device is not in use (e.g., by a user). This condition may be recognized variously, as in when no movement is detected. Conversely, an active state of the motion-tracking device may be detected when movement is detected in the images. An active state may be defined generally as the opposite condition of the idle state. In other words, the active state may be the condition in which the motion-tracking device is in use (e.g., by a user).

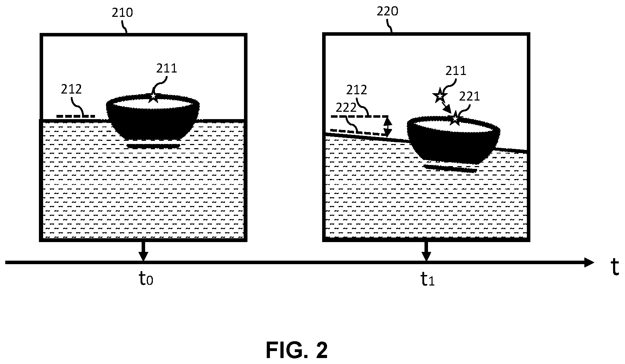

FIG. 2 illustrates motion tracking based on a sequence of images captured by a camera according to a possible implementation of the present disclosure. As shown, a first image 210 is captured by a camera of the motion-tracking device at a first time (t₀) and a second image 220 is captured by the camera of the motion-tracking device at a second time (t₁). While not required, the first image 210 and the second image 220 can be consecutive images of a video stream.

The first image 210 and the second image 220 may capture images of a rigid scene to determine its motion (i.e., egomotion). In the example shown, the first image 210 and the second image 220 include a bowl resting on a table. The bowl and the table are stationary during the period between the first time (t₀) and the second time (t₁) so the change in the position and the orientation of the table and the bowl can be assumed to result from a movement of the motion-tracking device. Analysis of the first image may include determining one or more features having a pixel position and/or pixel orientation in the first image. For example, the bowl in the first image 210 may define a first feature point 211 at a first pixel location, and the table in the first image 210 may define a first feature edge (i.e., first line 212) at a first angle. The bowl in the second image 220 may define a second feature point 221 at a second pixel location, and the table in the second image 220 may define a second feature edge (i.e., second line 222) at a second angle. A displacement related to the movement of the motion-tracking device may be computed by comparing the first location and the second location. For example, this comparison may include computing a horizontal change in location as a horizontal component (i.e., x-direction) of the displacement and computing a vertical change in location as a a vertical component (i.e., y-direction) of the displacement. A rotation related to the movement of the motion-tracking device may be computed by comparing the first angle to a second angle. For example, this comparison may include computing a roll angle as the difference between the first angle and the second angle.

The displacement and rotation illustrated in FIG. 2 are provided as examples, other feature points, lines, shapes, etc. may be recognized and tracked between images to determine other motions in other dimensions. For example, a size difference between the bowl in the first image 210 and the second image 220 may correspond to a movement towards (or away from) the bowl (i.e., z-direction displacement). Any, or all, of these computed displacements and rotations may be included in a camera measurement corresponding to the motion of the device. For example, a camera measurement may include any (or all) of a displacement in an x-direction (Dₓ), a displacement in a y-direction (D_{y}), a displacement in a z-direction (D_{z}), a rotation about an x-axis (ROLL), a rotation around a y-axis (PITCH), and a rotation around a z-axis (YAW).

Returning to FIG. 1, the motion-tracking device 100 may further include a second camera 111 configured to capture images of a second field-of-view 116, which may overlap a portion of the first field-of-view 115. The cameras may be aligned and focused so that a first image (e.g., right image) of the first field-of-view and a second image (e.g., left image) of the second field-of-view may be combined to form a stereoscopic image. The stereoscopic images may help to track the one or more features in three dimensions.

The motion-tracking device 100 further includes an inertial measurement unit (i.e., IMU). The IMU can include a plurality of sensors that are aligned with a reference coordinate system having three dimensions (i.e., X, Y, Z). An IMU of a device may be configured to track its changes in position/orientation (i.e., track its motion) with respect to each of the three dimensions. The IMU measurement can be combined with the camera measurement described previously to help track the movement of the motion-tracking device. This form of motion tracking may be referred to as visual inertial odometry (VIO).

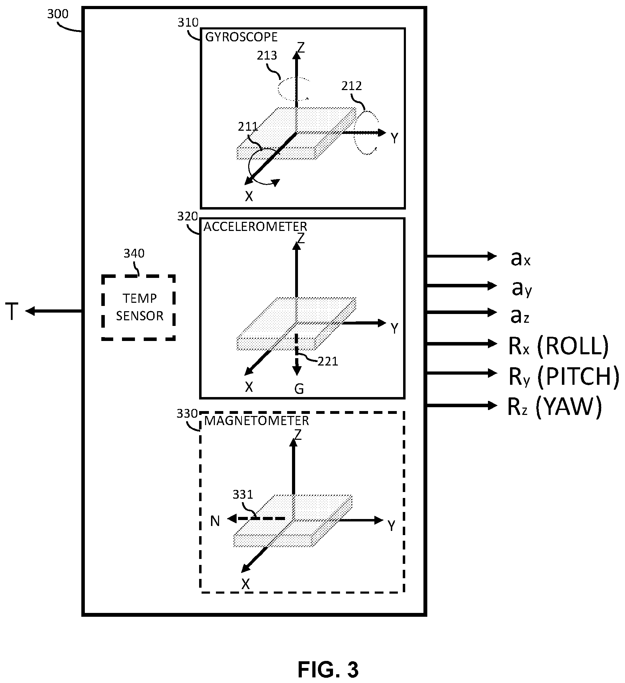

FIG. 3 is a system block diagram of an IMU for a motion-tracking device, such as shown in FIG. 1. The IMU 300 may output a motion measurement having six components (i.e., 6 degrees of freedom) including a first acceleration in an x-direction (i.e., aₓ), a second acceleration in a y-direction (i.e., a_{y}), a third acceleration in a z-direction (i.e., a_{z}), a first rotation (i.e., Rₓ) about an x-axis (ROLL), a second rotation (i.e., R_{y}) around a y-axis (PITCH), and a third rotation (i.e., R_{z}) around a z-axis (YAW). The six components are relative to a coordinate system (X, Y, Z) that may be aligned with, or define, a coordinate system of the motion-tracking device.

The IMU 300 may include a gyroscope module 310 including an X-axis gyroscope configured to measure the first rotation 211 (i.e., ROLL) around an X-axis of the coordinate system; a Y-axis gyroscope configured to measure the second rotation 312 (i.e., PITCH) around a Y-axis of the coordinate system; and a Z-axis gyroscope configured to measure the third rotation 313 (i.e.., YAW) around a Z-axis of the coordinate system associated with the motion-tracking device. Accordingly, the rotations measured by the gyroscope module 310 may be used in motion tracking (e.g., navigation) to measure change in the orientation of a motion tracking device.

A gyroscope of the IMU 300 may be implemented as a micro-electromechanical system (MEMS) in which a movement of a mass affixed to springs can be capacitively sensed to determine rotation. The alignment of the mass and the springs can determine the axis of the sensed rotation. Accordingly, the IMU 300 may include three MEMS gyroscopes, each aligned to sense a corresponding rotation around an axis of the coordinate system.

Each gyroscope may be configured to measure a rotation measurement, such as the angular rate of rotation around the axis of the gyroscope. Ideally, when a gyroscope is stationary its measured angular rate will be zero. In practice, a magnitude of a rotation measured by a stationary (i.e., idle state) gyroscope may be very small. For example, an expected motion measurement (i.e., expected rotation) of a gyroscope in an idle state may have a magnitude corresponding to the Earth's rotation (e.g., 15 degrees per hour) or less (e.g., zero). A gyroscope bias is an offset above this very small rotation (e.g., zero) that is added by imperfections in the gyroscope, such as mechanical deviations (from design) of the spring/mass of the MEMS capacitive sensor from design. These mechanical deviations are subject to change according to thermal conditions, and as a result, a gyroscope (i.e., gyro) bias may change according to temperature.

The IMU 300 may further include an accelerometer module 320 that includes an X-axis accelerometer configured to measure a first acceleration (i.e., aₓ) in an X-direction; a Y-axis accelerometer configured to measure a second acceleration (i.e., a_{y}) in a Y-direction; and a Z-axis accelerometer configured to measure a third acceleration (i.e., a_{z}) in a Z-direction.

An accelerometer module 320 of the IMU 300 may be implemented as a MEMS configured to capacitively sense a force (e.g., gravity 321) exerted on a movable mass to determine an acceleration. The accelerometer may effectively sense velocity or displacement by processing (e.g., integrating) the acceleration over time. For example, a measured acceleration (i.e., minus gravity) may be integrated once to compute velocity and may be integrated twice to compute a position. Accordingly, the acceleration measured by the accelerometer module 320 may be used in motion tracking (e.g., navigation) to measure change in the acceleration, velocity, or position of a motion tracking device.

Ideally, when an accelerometer is stationary its measured acceleration will be approximately gravity. In practice, a bias (i.e., offset) is added to the approximately gravity measurement of the stationary (i.e., idle) accelerometer. The bias can result from imperfections in the accelerometer, such as mechanical deviations (from design) of the movable MEMS sensor from design. These mechanical deviations are subject to change according to thermal conditions, and as a result, an accelerometer bias may change according to temperature.

The mechanical nature of the MEMS sensors described above can make their responses sensitive to changes in temperature and/or to changes in their installed environment. For example, a temperature change or a force due to use (or misuse) of the motion-tracking device can alter the sensitivity of the MEMS devices. For example, dropping or bending the motion-tracking device can cause a change in the installed environment, thereby changing a response of a gyroscope or an accelerometer of the IMU.

As mentioned above, the bias may be a function of temperature (i.e., bias(T)). Accordingly, the IMU 300 may include a temperature sensor 340 configured to output a temperature (T) of the IMU. The temperature can approximate (e.g., within a degree Celsius) a temperature of the gyroscope module 310 and the accelerometer module 320. Accordingly, the IMU 300 may be configured to output a motion measurement (e.g., rotation measurement, acceleration measurement) that includes a bias and may be further configured to output (e.g., output simultaneously) a temperature corresponding to the motion measurement (i.e., corresponding to the bias).

In a possible implementation the temperature sensor 340 is not included as part of the IMU 300 but rather is included in the motion-tracking device 100 on, or near, the IMU 300 so as to measure a temperature (T) that corresponds to the temperature of the gyroscope module 310 and the accelerometer module 320.

In a possible implementation, the IMU 300 can further include a magnetometer 330 that includes an X-axis magnetometer configured to measure a first magnetic field strength (i.e., Hₓ) an X-direction of the coordinate system, a Y-axis magnetometer configured to measure a second magnetic field strength (i.e., H_{y}) in a Y-direction of the coordinate system, and a Z-axis magnetometer configured to measure a third magnetic field strength (i.e., H_{z}) in a Z-direction of the coordinate system. The magnetic field strengths may be relative to the Earth's magnetic field 331 (i.e., north (N)).

Returning to FIG. 1, the motion-tracking device 100 further includes a memory 160. The memory may be a non-transitory computer-readable medium and may be configured to store instructions that, when executed by the processor 150, can configure the motion tracking device to perform the disclosed methods. For example, the memory 160 may be configured to store IMU data and camera images (i.e., IMU/camera data 161) collected as part of a motion tracking process executed by the motion-tracking device 100 while in an active state.

Camera data can include images captured by the camera and/or can include movements determined by processing the images captured by the camera. The IMU data and the camera data (e.g., camera images) can be collected during a motion-tracking process. Accordingly, IMU data and camera data can be linked in the database according to a motion-tracking process. The database may include a plurality of motion tracking processes, each having associated IMU data and camera data. The IMU data and camera data may be further associated in the database by a timestamp at which both were captured. One advantage of the present approach is that the IMU data and camera data can be collected piecewise over a first period (e.g., during the day) and then processed over a second (idle) period (e.g., during the night) to determine calibration parameters corresponding to the collected data. Accordingly, the memory 160 may be further configured to store (optimized) calibration parameters 162.

The motion-tracking device 100 may further include a display 190. For example, the display 190. In a possible implementation, the display 190 is a heads-up display (i.e., HUD). The motion-tracking device 100 may further include a battery 180. The battery 180 may be configured to provide energy to the subsystems, modules, and devices of the motion-tracking device 100 to enable their operation. The battery 180 may be rechargeable and have an operating life (e.g., lifetime) between charges. Accordingly, the processor 150 may be configured to execute (i.e., run) a process to charge the battery (i.e., battery-charging process).

The battery-charging process may indicate (to the processor 150) that the motion-tracking device is idle. For example, if battery charging continues for a period after reaching full (100%) charge, then the motion-tracking device may be considered to be in an idle state. Conversely, an active state may be detected while the motion tracking device is not executing a battery-charging process.

The motion-tracking device 100 may further include a communication interface 170. The communication interface may be configured to communicate information digitally over a wireless communication link 171 (e.g., WiFi, Bluetooth, etc.). For example, the motion-tracking device may be communicatively coupled to a network 172 (i.e., the cloud) or a device (e.g., mobile phone 173) over the wireless communication link 171. The wireless communication link may allow operations of a computer-implemented method to be divided between devices and/or could allow for remote storage of the IMU/camera data 161 and/or the calibration parameters 162. The motion-tracking device may be used for augmented reality (AR) or virtual reality (VR).

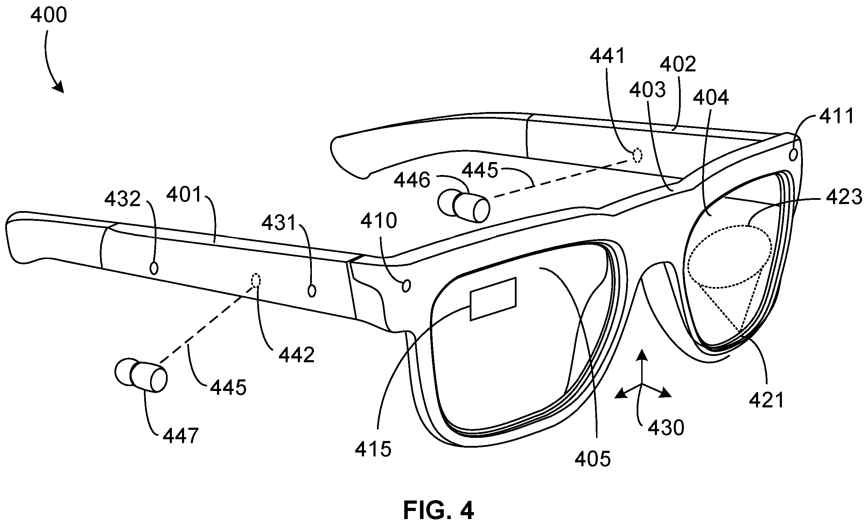

FIG. 4 is a perspective view of an implementation of the motion-tracking device. The motion-tracking device may be smart glasses configured for augmented reality (i.e., augmented reality glasses). The AR glasses 400 can be configured to be worn on a head and face of a user. The AR glasses 400 include a right earpiece 401 and a left earpiece 402 that are supported by the ears of a user. The AR glasses further include a bridge portion 403 that is supported by the nose of the user so that a left lens 404 and a right lens 405 can be positioned in front a left eye of the user and a right eye of the user respectively. The portions of the AR glasses can be collectively referred to as the frame of the AR glasses. The frame of the AR glasses can contain electronics to enable function. For example, the frame may include a battery, a processor, a memory (e.g., non-transitory computer readable medium), electronics to support sensors (e.g., cameras, depth sensors, etc.), at least one position sensor (e.g., an inertial measurement unit) and interface devices (e.g., speakers, display, network adapter, etc.). The AR glasses may display and sense an environment relative to a coordinate system 430. The coordinate system 430 can be aligned with the head of a user wearing the AR glasses. For example, the eyes of the user may be along a line in a horizontal (e.g., X-direction) direction of the coordinate system 430.

A user wearing the AR glasses can experience information displayed in an area corresponding to the lens (or lenses) so that the user can view virtual elements within their natural field of view. Accordingly, the AR glasses 400 can further include a heads-up display (i.e., HUD) configured to display visual information at a lens (or lenses) of the AR glasses. As shown, the heads-up display may present AR data (e.g., images, graphics, text, icons, etc.) on a portion 415 of a lens (or lenses) of the AR glasses so that a user may view the AR data as the user looks through a lens of the AR glasses. In this way, the AR data can overlap with the user's view of the environment. In a possible implementation, the portion 415 can correspond to (i.e., substantially match) area(s) of the right lens 405 and/or left lens 404.

The AR glasses 400 can include an IMU that is configured to track motion of the head of a user wearing the AR glasses. The IMU may be disposed within the frame of the AR glasses and aligned with the coordinate system 430 of the AR glasses 400.

The AR glasses 400 can include a first camera 410 that is directed to a first camera field-of-view that overlaps with the natural field-of-view of the eyes of the user when the glasses are worn. In other words, the first camera 410 can capture images of a view aligned with a point-of-view (POV) of a user (i.e., an egocentric view of the user).

In a possible implementation, the AR glasses 400 can further include a second camera 411 that is directed to a second camera field-of-view that overlaps with the natural field-of-view of the eyes of a user when the glasses are worn. The second camera 411 and the first camera 410 may be configured to capture stereoscopic images of the field of view of the user that includes depth information about objects in the field of view of the user. The depth information may be generated using visual odometry and used as part of the camera measurement corresponding to the motion of the motion-tracking device.

In a possible implementation, the AR glasses may further include a depth-sensor configured to capture a depth image corresponding to the field-of-view of the user. The depth image includes pixels having pixel values that correspond to depths (ranges) to objects measured at positions corresponding to the pixel positions in the depth image.

The AR glasses 400 can further include an eye-tracking sensor. The eye tracking sensor can include a right-eye camera and/or a left-eye camera 421. As shown, a left-eye camera 421 can be located in a portion of the frame so that a left FOV 423 of the left-eye camera 421 includes the left eye of the user when the AR glasses are worn.

The AR glasses 400 can further include one or more microphones. The one or more microphones can be spaced apart on the frames of the AR glasses. As shown in FIG. 4, the AR glasses can include a first microphone 431 and a second microphone 432. The microphones may be configured to operate together as a microphone array. The microphone array can be configured to apply sound localization to determine directions of the sounds relative to the AR glasses.

The AR glasses may further include a left speaker 441 and a right speaker 442 configured to transmit audio to the user. Additionally, or alternatively, transmitting audio to a user may include transmitting the audio over a wireless communication link 345 to a listening device (e.g., hearing aid, earbud, etc.). For example, the AR glasses may transmit audio to a left wireless earbud 446 and to a right earbud 447.

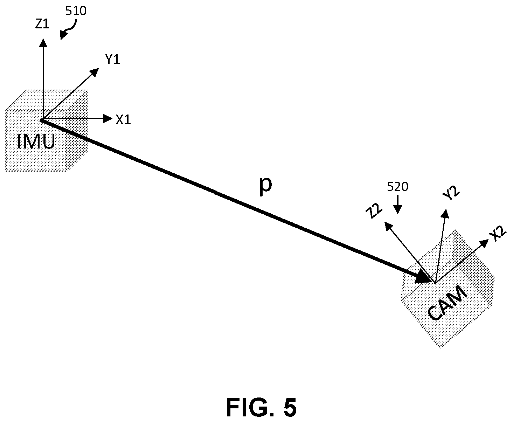

FIG. 5 illustrates relative position and orientation of the IMU and camera according to a possible implementation of the present disclosure. An IMU (i.e., IMU) having a first pose (i.e., IMU pose 510) aligned with an X1, Y1, Z1 coordinate system (i.e., first frame) and a camera (i.e., CAM) having a second pose (i.e., camera pose 520) aligned with an X2, Y2, Z2 coordinate system (i.e., second frame). A transformation between the IMU pose 510 and the camera pose 520 can include a translation and a rotation. A translation from the first pose to the second pose (i.e., pose transformation) may be defined by a vector (p) pointing from the origin of the first frame to the origin of the second frame. The pose transformation between the two poses can further include a rotation (or rotations) relative to the axes of one of the frames. The first frame or the second frame may be aligned with the coordinate system 430 of the motion-tracking device, as shown in FIG. 4.

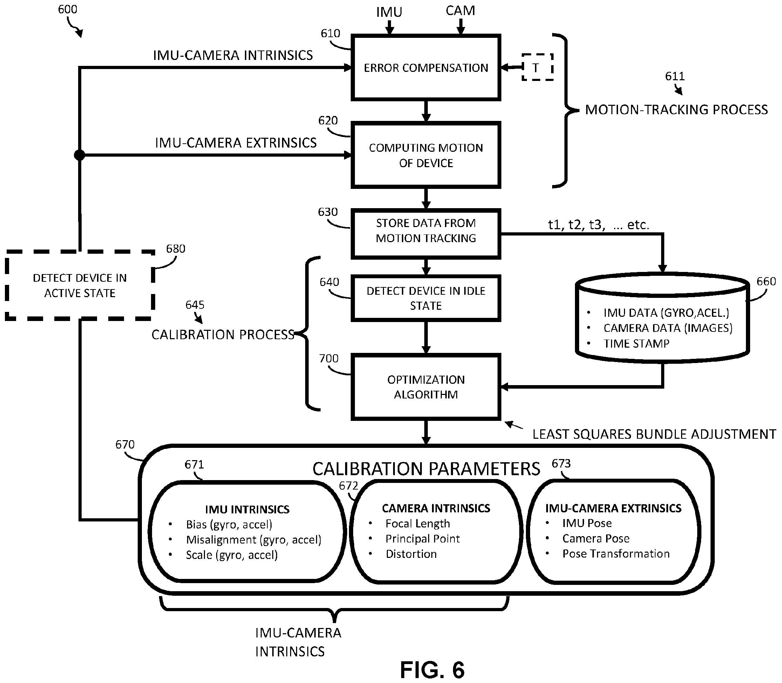

FIG. 6 is a flow chart of a method for determining a set of calibration parameters for a motion tracking process according to an implementation of the present disclosure. The method 600 can include receiving IMU data from an IMU of a motion tracking device and camera images from a camera (i.e., CAM) for a motion-tracking process 611.

The motion-tracking process 611 may be executed by a motion-tracking device while it is in an active state. Accordingly, the method 600 may include detecting that the motion-tracking device is in the active state before executing the motion tracking process. For example, the active state may be detected by an AR application running on the motion-tracking device (e.g., AR glasses), which requires motion-tracking. In a possible implementation, the motion tracking device may be used over a period that includes a plurality of motion tracking sessions.

The method 600 may further include storing 620 the data (i.e., IMU data, camera images) collected during a motion tracking process into a database 630. The data of the different sensors (e.g., camera, IMU) can be linked in the database 630 based on the times at which the data was collected. In other words, the IMU data and the camera image can be indexed (i.e., identified) in the database 660 based on timestamps. This allows for the data in the database 660 to be collected piecewise over different motion-tracking sessions, as identified by time (e.g., t1, t2, etc.) to be used for a calibration process 645. In other words, the IMU data and the camera data can be associated by a timestamp (e.g., t1) linked with a motion-tracking process (i.e., session) in the database 660 along with other IMU data and other camera data associated by other timestamps (e.g., t2, t3) linked with other motion-tracking processes.

The calibration process 645 includes detecting 640 that the motion-tracking device is in the idle state. In a possible implementation, this idle state detection can be triggered by the motion-tracking device charging its battery. In another possible implementation, executing a battery-charging process for a period greater than a threshold period may trigger the idle state detection. In another possible implementation, lack of detected movement may trigger the idle state. For example, a plurality of images, collected by the camera, may be analyzed to determine that the motion-tracking device has been stationary for a period longer than a threshold to trigger the idle state. In another example, IMU data collected by the IMU, may be analyzed to determine that the motion-tracking device has been stationary for a period longer than a threshold to trigger the idle state.

The calibration process 645 further includes an optimization algorithm 700. The optimization algorithm can include adjusting a set of calibration parameters 670 to determine (e.g., iteratively optimize) estimates that reduce (e.g., minimize) a cost function. A cost function may be generally described as an error signal for an optimization process, which iteratively adjusts (i.e., increases, decreases) variables to minimize the error signal. An optimization process may conclude adjusting when it determines a set of variables that provides the lowest possible error signal, or at least an error signal that is below a minimum value. The cost function used for the optimization may be based on a pose of the device which should be measured by the IMU and the camera equally. For example, a difference between a first device pose based on (e.g., determined by) the IMU data and a second device pose based on (e.g., determined by) the camera data (e.g., camera images) may be used as a cost function of the optimization algorithm 700. The calibration parameters 670 may be adjusted (e.g., using bundle adjustment) until the difference is minimized (e.g., made zero). These adjusted calibration parameters may be stored as the set calibration parameters 670 used for subsequent motion-tracking processes.

As described previously, the set of calibration parameters 670 include IMU intrinsics 671, camera intrinsics 672, and IMU-camera extrinsics 673. The IMU intrinsics 671 can include any of a gyroscope bias (i.e., X-gryo bias, Y-gyro bias, Z-gyro bias), an accelerometer bias (i.e., X-accel bias, Y-accel bias, Z-accel bias), a gyroscope misalignment (i.e., X-gyro misalignment, Y-gyro misalignment, a Z-gyro misalignment), an accelerometer misalignment (i.e., X-accel misalignment, Y-accel misalignment, Z-accel misalignment), a gyroscope scale (i.e., X-gyro scale, Y-gyro scale, a Z-gyro scale), and an accelerometer scale (i.e., X-accel scale, Y-accel scale, Z-accel scale). In a possible implementation, the gyroscope bias and/or the accelerometer bias are functions of temperature. The camera intrinsics 672 can include any of a focal length (e.g., millimeters), principal point (e.g., pixel position), and distortion (e.g., percentage/pixel). The IMU-camera extrinsics 673 can includes an IMU pose, a camera pose and a pose transformation between the IMU pose and the camera pose. Each of these parameters may be considered as a variable that can be adjusted in the optimization process (i.e., optimization algorithm 700).

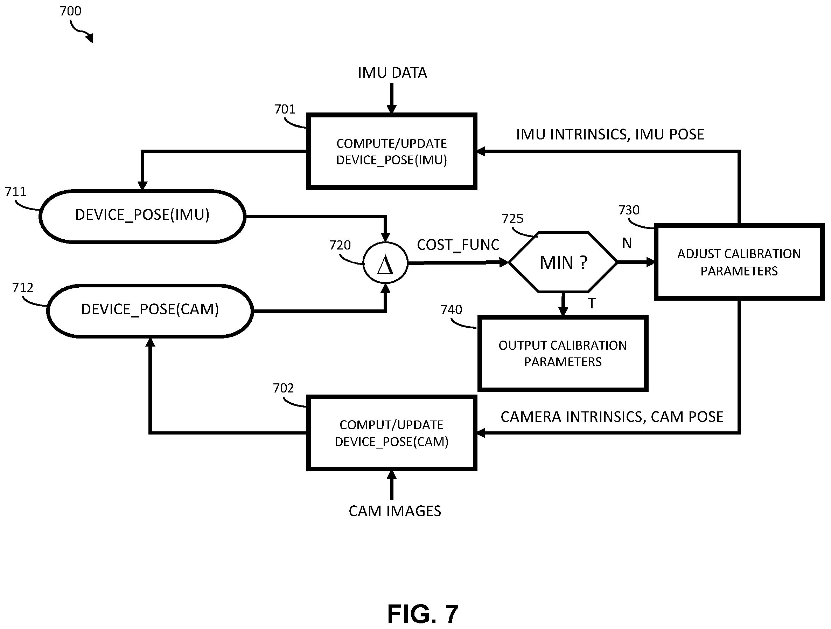

FIG. 7 is a flow chart of a method for optimizing the set of calibration parameters according to a possible implementation of the present disclosure. The method may be carried out by performing a bundle adjustment on the set of calibration parameters 670 according to a least squares process to minimize a cost function (i.e., COST_FUNC). While shown as a sequential flow chart here for understanding in practice the mathematics may have more parallelism.

The method 700 includes calculating a cost function as a difference 720 between a first device pose 711 (i.e., DEVICE_POS(IMU)) and a second device pose 712 (i.e., DEVICE_POS(CAM)). The first device pose 711 is computed 701 based on IMU data from the IMU and the second device pose 712 is computed 702 based on the camera images. Ideally these poses are equal because the device can only have one pose at any moment captured during a movement. In other words, the device pose determined by the IMU should match the device pose determined by the camera and should both match the pose changes experienced by the device over the course of a movement. The quality of this match (i.e., the amplitude of the cost function) is a result of the calibration parameters. Accordingly, the method 700 further includes a criterion 725 to determine if the cost function is minimized (e.g., zero). If not, then method 700 includes adjusting one or more of the calibration parameters in the set of calibration parameters and recalculating the cost function based on the adjusted calibration parameters. This process may be repeated until the criterion 725 is satisfied. For example, when the difference 720 between the device poses is at below a minimum threshold (e.g., zero) then the calibration parameters may be optimized. After optimization is complete the calibration parameters may be output 740 (e.g., to a memory).

Returning to FIG. 6, the calibration parameters 670 may be used in a motion-tracking process 611. For example, the IMU-camera intrinsics may be used to compensate for errors in the received IMU data and the camera images. In other words, the method 600 includes an error compensation 610 configured to output corrected IMU data and corrected images based on the IMU-camera intrinsics. In a possible implementation, the error compensation 610 may receive a temperature (T) of the IMU to help compute a bias, which may be a function of temperature

The method 600 further includes computing 620 a motion of the device based on the corrected IMU data and correct images based on the IMU-camera extrinsics, which can help combine and/or compare the data from the different perspectives (i.e., poses).

While certain features of the described implementations have been illustrated as described herein, the invention is set out in the appended claims.

It will be understood that, in the foregoing description, when an element is referred to as being on, connected to, electrically connected to, coupled to, or electrically coupled to another element, it may be directly on, connected or coupled to the other element, or one or more intervening elements may be present. In contrast, when an element is referred to as being directly on, directly connected to or directly coupled to another element, there are no intervening elements present. Although the terms directly on, directly connected to, or directly coupled to may not be used throughout the detailed description, elements that are shown as being directly on, directly connected or directly coupled can be referred to as such.

As used in this specification, a singular form may, unless definitely indicating a particular case in terms of the context, include a plural form. Spatially relative terms (e.g., over, above, upper, under, beneath, below, lower, and so forth) are intended to encompass different orientations of the device in use or operation in addition to the orientation depicted in the figures. In some implementations, the relative terms above and below can, respectively, include vertically above and vertically below. In some implementations, the term adjacent can include laterally adjacent to or horizontally adjacent to.

## Claims

1. A computer-implemented method comprising:
receiving inertial measurement unit (IMU) data (aₓ, a_{y}, a_{z}; Rₓ, R_{y}, R_{z}) from an IMU (300) of a motion-tracking device (100) and camera images (210, 220) from a camera (110, 111) of the motion-tracking device (100) as part of a motion-tracking process executed by the motion-tracking device (100) while in use;
storing the IMU data (aₓ, a_{y}, a_{z}; Rₓ, R_{y}, R_{z}) and camera images (210, 220) in a database (660);
detecting that the motion-tracking device (100) is not in use;
in response to detecting that the motion-tracking device (100) is not in use, retrieving IMU data (aₓ, a_{y}, a_{z}; Rₓ, R_{y}, R_{z}) and camera images (210, 220) from the database (660) and adjusting a set of calibration parameters to reduce a cost function based on a pose difference between a first device pose determined based on the IMU data (aₓ, a_{y}, a_{z}; Rₓ, R_{y}, R_{z}) and a second device pose based on the camera images (210, 220), while the motion-tracking device (100) is not in use; and
using the set of calibration parameters in a subsequent motion-tracking process after the motion-tracking device (100) returns to use.

2. The method according to claim 1, wherein the set of calibration parameters includes IMU intrinsics, camera intrinsics, and IMU-camera extrinsics.

3. The method according to claim 2, wherein the IMU intrinsics include a bias, a misalignment, and a scale for each gyroscope and for each accelerometer.

4. The method according to claim 2 or 3, wherein the camera intrinsics include a focal length, a principal point, and a distortion.

5. The method according to any of claims 2 - 4 wherein the IMU-camera extrinsics include a pose transformation between an IMU pose and a camera pose.

6. The method according to any one of the preceding claims, wherein detecting that the motion-tracking device (100) is not in use includes:
detecting that the motion-tracking device (100) has been executing a battery-charging process for a period greater than a threshold period.

7. The method according to any one of the preceding claims, wherein detecting that the motion-tracking device (100) is not in use includes:
collecting a plurality of images over a period using the camera (110, 111) of the motion-tracking device (100); and
determining from the plurality of images collected over the period that the motion-tracking device (100) has been stationary for the period.

8. The method according to any one of the preceding claims, wherein detecting that the motion-tracking device (100) is not in use includes:
collecting IMU data (aₓ, a_{y}, a_{z}; Rₓ, R_{y}, R_{z}) over a period using the IMU (300) of the motion-tracking device (100); and
determining from IMU data (aₓ, a_{y}, a_{z}; Rₓ, R_{y}, R_{z}) collected over the period that the motion-tracking device (100) has been stationary for the period.

9. The method according to any one of the preceding claims, wherein the database (660) includes IMU data (aₓ, a_{y}, a_{z}; Rₓ, R_{y}, R_{z}) and camera data associated by a timestamp linked with the motion-tracking process, the database (660) including other IMU data (aₓ, a_{y}, a_{z}; Rₓ, R_{y}, R_{z}) and other camera data associated by other timestamps linked with other motion-tracking processes.

10. The method according to any one of the preceding claims, wherein adjusting the set of calibration parameters includes:
performing a bundle adjustment on the set of calibration parameters according to a least squares process to minimize the cost function.

11. The method according to any one of the preceding claims, wherein using the set of calibration parameters in the subsequent motion-tracking process after the motion-tracking device (100) returns to use includes:
generating corrected IMU data by compensating for IMU errors in IMU data (aₓ, a_{y}, a_{z}; Rₓ, R_{y}, R_{z}) captured for the subsequent motion-tracking process based on the set of calibration parameters; and
generating corrected images by compensating for camera errors in the camera images (210, 220) for the subsequent motion-tracking process based on the set of calibration parameters.

12. The method according to claim 11, wherein compensating for IMU errors in IMU data (aₓ, a_{y}, a_{z}; Rₓ, R_{y}, R_{z}) includes:
determining a temperature of the IMU (300);
computing a plurality of estimated biases based on the temperature of the IMU (300); and
reducing biases in the IMU data (aₓ, a_{y}, a_{z}; Rₓ, R_{y}, R_{z}) based on the plurality of estimated biases to generate the corrected IMU data.

13. The method according to claim 11 or 12, wherein using the set of calibration parameters in the subsequent motion-tracking process after the motion-tracking device (100) returns to use further includes:
computing a motion of the motion-tracking device (100) based on the corrected IMU data and the corrected images; and
using the motion of the motion-tracking device (100) for an augmented reality application.

14. A motion-tracking device including:
an inertial measurement unit (IMU 300) configured to capture IMU data (aₓ, a_{y}, a_{z}; Rₓ, R_{y}, R_{z}) corresponding to a pose of the motion-tracking device (100);
a camera (110, 111) configured to capture camera images (210, 220) corresponding to the pose of the motion-tracking device (100);
a memory (160) including a database (660) configured to store the IMU data (aₓ, a_{y}, a_{z}; Rₓ, R_{y}, R_{z}) and the camera images (210, 220) according to a motion-tracking process, the motion-tracking process executed by the motion-tracking device (100) at a time while the motion-tracking device (100) was in use; and
a processor (150) configured by software instructions recalled from the memory (160) to:
detect that the motion-tracking device (100) is not in use;
in response to detecting that the motion-tracking device (100) is not in use, retrieve the IMU data (aₓ, a_{y}, a_{z}; Rₓ, R_{y}, R_{z}) and the camera images (210, 220) from the database (660) and adjust a set of calibration parameters to reduce a cost function based on a pose difference between a first device pose determined based on the IMU data (aₓ, a_{y}, a_{z}; Rₓ, R_{y}, R_{z}) and a second device pose based on the camera images (210, 220), while the motion-tracking device (100) is not in use; and
use the set of calibration parameters in a subsequent motion-tracking process after the motion-tracking device (100) returns to use.

15. The motion-tracking device according to claim 14 being adapted to perform the method of any one of claims 2-5, 9 and 12.

16. The motion-tracking device according to claim 14 or 15, wherein the processor (150) is configured to perform the method of any one of claims 6-8, 10, 11, and 13.

## Patentansprüche

1. Computerimplementiertes Verfahren, umfassend:
Empfangen von Trägheitsmesseinheitsdaten (inertial measurement unit, IMU) (aₓ, a_{y}, a_{z}; Rₓ, R_{y}, R_{z}) von einer IMU (300) einer Bewegungsverfolgungsvorrichtung (100) und von Kamerabildern (210, 220) von einer Kamera (110, 111) der Bewegungsverfolgungsvorrichtung (100) als Teil eines Bewegungsverfolgungsprozesses, der durch die Bewegungsverfolgungsvorrichtung (100) während der Verwendung ausgeführt wird;
Speichern der IMU-Daten (aₓ, a_{y}, a_{z}; Rₓ, R_{y}, R_{z}) und der Kamerabilder (210, 220) in einer Datenbank (660);
Detektieren, dass die Bewegungsverfolgungsvorrichtung (100) nicht verwendet wird;
als Reaktion auf das Detektieren, dass die Bewegungsverfolgungsvorrichtung (100) nicht verwendet wird, Abrufen von IMU-Daten (aₓ, a_{y}, a_{z}; Rₓ, R_{y}, R_{z}) und Kamerabildern (210, 220) aus der Datenbank (660) und Anpassen eines Satzes von Kalibrierungsparametern, um eine Kostenfunktion basierend auf einer Posendifferenz zwischen einer ersten Vorrichtungspose, die basierend auf den IMU-Daten (aₓ, a_{y}, a_{z}; Rₓ, R_{y}, R_{z}) und einer zweiten auf den Kamerabildern (210, 220) basierenden Vorrichtungspose zu reduzieren, während die Bewegungsverfolgungsvorrichtung (100) nicht verwendet wird; und
Verwenden des Satzes von Kalibrierungsparametern in einem nachfolgenden Bewegungsverfolgungsprozess, nachdem die Bewegungsverfolgungsvorrichtung (100) wieder verwendet wird.

2. Verfahren nach Anspruch 1, wobei der Satz von Kalibrierungsparametern IMU-Intrinsics, Kamera-Intrinsics und IMU-Kamera-Extrinsics beinhaltet.

3. Verfahren nach Anspruch 2, wobei die IMU-Intrinsics einen Fehler, eine Fehlausrichtung und eine Skala für jedes Gyroskop und für jeden Beschleunigungsmesser beinhalten.

4. Verfahren nach Anspruch 2 oder 3, wobei die Kamera-Intrinsics eine Brennweite, einen Hauptpunkt und eine Verzeichnung beinhalten.

5. Verfahren nach einem der Ansprüche 2-4, wobei die IMU-Kamera-Extrinsik eine Posentransformation zwischen einer IMU-Pose und einer Kamera-Pose beinhaltet.

6. Vorrichtung nach einem der vorhergehenden Ansprüche, wobei das Detektieren, dass die Bewegungsverfolgungsvorrichtung (100) nicht verwendet wird, Folgendes beinhaltet:
Detektieren, dass die Bewegungsverfolgungsvorrichtung (100) einen Batterieladevorgang für einen Zeitraum ausgeführt hat, der größer ist als eine Schwellenperiode.

7. Vorrichtung nach einem der vorhergehenden Ansprüche, wobei das Detektieren, dass die Bewegungsverfolgungsvorrichtung (100) nicht verwendet wird, Folgendes beinhaltet:
Sammeln einer Vielzahl von Bildern über einen Zeitraum unter Verwendung der Kamera (110, 111) der Bewegungsverfolgungsvorrichtung (100); und
Bestimmen aus der Vielzahl von Bildern, die über den Zeitraum gesammelt wurden, dass die Bewegungsverfolgungsvorrichtung (100) für den Zeitraum stationär gewesen ist.

8. Vorrichtung nach einem der vorhergehenden Ansprüche, wobei das Detektieren, dass die Bewegungsverfolgungsvorrichtung (100) nicht verwendet wird, Folgendes beinhaltet:
Sammeln von IMU-Daten (aₓ, a_{y}, a_{z}; Rₓ, R_{y}, R_{z}) über einen Zeitraum unter Verwendung der IMU (300) der Bewegungsverfolgungsvorrichtung (100); und
Bestimmen von IMU-Daten (aₓ, a_{y}, a_{z}; Rₓ, R_{y}, R_{z}), die über den Zeitraum gesammelt wurden, dass die Bewegungsverfolgungsvorrichtung (100) für den Zeitraum stationär gewesen ist.

9. Verfahren nach einem der vorhergehenden Ansprüche, wobei die Datenbank (660) IMU-Daten (aₓ, a_{y}, a_{z}; Rₓ, R_{y}, R_{z}) und Kameradaten beinhaltet, die durch einen mit dem Bewegungsverfolgungsprozess verknüpften Zeitstempel zugeordnet sind, wobei die Datenbank (660) andere IMU-Daten (aₓ, a_{y}, a_{z}; Rₓ, R_{y}, R_{z}) und andere Kameradaten beinhaltet, die durch andere Zeitstempel zugeordnet sind, die mit anderen Bewegungsverfolgungsprozessen verknüpft sind.

10. Verfahren nach einem der vorhergehenden Ansprüche, wobei das Anpassen des Satzes von Kalibrierungsparametern Folgendes beinhaltet:
Durchführen einer Bündelanpassung an dem Satz von Kalibrierungsparametern gemäß einem Verfahren der kleinsten Quadrate, um die Kostenfunktion zu minimieren.

11. Verfahren nach einem der vorhergehenden Ansprüche, wobei das Verwenden des Satzes von Kalibrierungsparametern in dem nachfolgenden Bewegungsverfolgungsprozess, nachdem die Bewegungsverfolgungsvorrichtung (100) wieder verwendet wird, Folgendes beinhaltet:
Erzeugen von korrigierten IMU-Daten durch Kompensieren von IMU-Fehlern in IMU-Daten (aₓ, a_{y}, a_{z}; Rₓ, R_{y}, R_{z}), die für den nachfolgenden Bewegungsverfolgungsprozess basierend auf dem Satz von Kalibrierungsparametern aufgenommen wurden; und
Erzeugen von korrigierten Bildern durch das Kompensieren von Kamerafehlern in den Kamerabildern (210, 220) für den nachfolgenden Bewegungsverfolgungsprozess basierend auf dem Satz von Kalibrierungsparametern.

12. Verfahren nach Anspruch 11, wobei das Kompensieren von IMU-Fehlern in IMU-Daten (aₓ, a_{y}, a_{z}; Rₓ, R_{y}, R_{z}) Folgendes beinhaltet:
Bestimmen einer Temperatur der IMU (300);
Berechnen einer Vielzahl von geschätzten Fehlern basierend auf der Temperatur der IMU (300); und
Reduzieren von Fehlern in den IMU-Daten (aₓ, a_{y}, a_{z}; Rₓ, R_{y}, R_{z}) basierend auf der Vielzahl von geschätzten Fehlern, um die korrigierten IMU-Daten zu erzeugen.

13. Verfahren nach Anspruch 11 oder 12, wobei das Verwenden des Satzes von Kalibrierungsparametern in dem nachfolgenden Bewegungsverfolgungsprozess, nachdem die Bewegungsverfolgungsvorrichtung (100) wieder verwendet wird, ferner Folgendes beinhaltet:
Berechnen einer Bewegung der Bewegungsverfolgungsvorrichtung (100) basierend auf den korrigierten IMU-Daten und den korrigierten Bildern; und
Verwenden der Bewegung der Bewegungsverfolgungsvorrichtung (100) für eine Anwendung der erweiterten Realität.

14. Bewegungsverfolgungsvorrichtung, die Folgendes beinhaltet:
eine Inertialmesseinheit (IMU 300), die dazu konfiguriert ist, IMU-Daten (aₓ, a_{y}, a_{z}; Rₓ, R_{y}, R_{z}) aufzunehmen, die einer Pose der Bewegungsverfolgungsvorrichtung (100) entsprechen;
eine Kamera (110, 111), die dazu konfiguriert ist, Kamerabilder (210, 220) aufzunehmen, die der Pose der Bewegungsverfolgungsvorrichtung (100) entsprechen;
einen Speicher (160), der eine Datenbank (660) beinhaltet, die dazu konfiguriert ist, die IMU-Daten (aₓ, a_{y}, a_{z}; Rₓ, R_{y}, R_{z}) und die Kamerabilder (210, 220) gemäß einem Bewegungsverfolgungsprozess zu speichern, wobei der Bewegungsverfolgungsprozess durch die Bewegungsverfolgungsvorrichtung (100) zu einem Zeitpunkt ausgeführt wird, während die Bewegungsverfolgungsvorrichtung (100) verwendet wurde; und
einen Prozessor (150), der durch Softwareanweisungen, die aus dem Speicher (160) abgerufen werden, konfiguriert ist zum:
Detektieren, dass die Bewegungsverfolgungsvorrichtung (100) nicht verwendet wird;
als Reaktion auf das Detektieren, dass die Bewegungsverfolgungsvorrichtung (100) nicht verwendet wird, Abrufen der IMU-Daten (aₓ, a_{y}, a_{z}; Rₓ, R_{y}, R_{z}) und der Kamerabilder (210, 220) aus der Datenbank (660) und Anpassen eines Satzes von Kalibrierungsparametern, um eine Kostenfunktion basierend auf einer Posendifferenz zwischen einer ersten Vorrichtungspose, die basierend auf den IMU-Daten (aₓ, a_{y}, a_{z}; Rₓ, R_{y}, R_{z}) und einer zweiten auf den Kamerabildern (210, 220) basierenden Vorrichtungspose zu reduzieren, während die Bewegungsverfolgungsvorrichtung (100) nicht verwendet wird; und
Verwenden des Satzes von Kalibrierungsparametern in einem nachfolgenden Bewegungsverfolgungsprozess, nachdem die Bewegungsverfolgungsvorrichtung (100) wieder verwendet wird.

15. Bewegungsverfolgungsvorrichtung nach Anspruch 14, die geeignet ist, das Verfahren nach einem der Ansprüche 2-5, 9 und 12 durchzuführen.

16. Bewegungsverfolgungsvorrichtung nach Anspruch 14 oder 15, wobei der Prozessor (150) dazu konfiguriert ist, das Verfahren nach den Ansprüchen 6-8, 10, 11 und 13 durchzuführen.

## Revendications

1. Procédé mis en œuvre par ordinateur comprenant :
la réception de données d'unité de mesure inertielle (IMU) (aₓ, a_{y}, a_{z} ; Rₓ, R_{y}, R_{z}) à partir d'une IMU (300) d'un dispositif de suivi de mouvement (100) et d'images de caméra (210, 220) à partir d'une caméra (110, 111) du dispositif de suivi de mouvement (100) dans le cadre d'un processus de suivi de mouvement exécuté par le dispositif de suivi de mouvement (100) pendant son utilisation ;
le stockage des données IMU (aₓ, a_{y}, a_{z} ; Rₓ, R_{y}, R_{z}) et des images de caméra (210, 220) dans une base de données (660) ;
la détection selon laquelle le dispositif de suivi de mouvement (100) n'est pas utilisé ;
en réponse à la détection selon laquelle le dispositif de suivi de mouvement (100) n'est pas utilisé, la récupération de données IMU (aₓ, a_{y}, a_{z} ; Rₓ, R_{y}, R_{z}) et d'images de caméra (210, 220) à partir de la base de données (660) et le réglage d'un ensemble de paramètres d'étalonnage pour réduire une fonction de coût sur la base d'une différence de pose entre une première pose de dispositif déterminée sur la base des données IMU (aₓ, a_{y}, a_{z} ;
Rₓ, R_{y}, R_{z}) et une seconde pose de dispositif sur la base des images de caméra (210, 220), alors que le dispositif de suivi de mouvement (100) n'est pas utilisé ; et
l'utilisation de l'ensemble de paramètres d'étalonnage dans un processus de suivi de mouvement ultérieur après la remise en service du dispositif de suivi de mouvement (100).

2. Procédé selon la revendication 1, dans lequel l'ensemble de paramètres d'étalonnage comporte des intrinsèques de l'IMU, des intrinsèques de la caméra et des extrinsèques de l'IMU-caméra.

3. Procédé selon la revendication 2, dans lequel les intrinsèques de l'IMU comportent un biais, un désalignement et une échelle pour chaque gyroscope et pour chaque accéléromètre.

4. Procédé selon la revendication 2 ou 3, dans lequel les intrinsèques de la caméra comportent une distance focale, un point principal et une distorsion.

5. Procédé selon l'une quelconque des revendications 2 à 4, dans lequel les extrinsèques de l'IMU-caméra comportent une transformation de pose entre une pose IMU et une pose de caméra.

6. Procédé selon l'une quelconque des revendications précédentes, dans lequel la détection selon laquelle le dispositif de suivi de mouvement (100) n'est pas utilisé comporte :
la détection selon laquelle le dispositif de suivi de mouvement (100) a exécuté un processus de charge de batterie pendant une période supérieure à une période seuil.

7. Procédé selon l'une quelconque des revendications précédentes, dans lequel la détection selon laquelle le dispositif de suivi de mouvement (100) n'est pas utilisé comporte :
la collecte d'une pluralité d'images sur une période à l'aide de la caméra (110, 111) du dispositif de suivi de mouvement (100) ; et
la détermination à partir de la pluralité d'images collectées au cours de la période selon laquelle le dispositif de suivi de mouvement (100) est resté stationnaire pendant la période.

8. Procédé selon l'une quelconque des revendications précédentes, dans lequel la détection selon laquelle le dispositif de suivi de mouvement (100) n'est pas utilisé comporte :
la collecte de données IMU (aₓ, a_{y}, a_{z} ; Rₓ, R_{y}, R_{z}) sur une période à l'aide de l'IMU (300) du dispositif de suivi de mouvement (100) ; et
la détermination à partir de données IMU (aₓ, a_{y}, a_{z} ; Rₓ, R_{y}, R_{z}) collectées au cours de la période selon laquelle le dispositif de suivi de mouvement (100) est resté stationnaire pendant la période.

9. Procédé selon l'une quelconque des revendications précédentes, dans lequel la base de données (660) comporte des données IMU (aₓ, a_{y}, a_{z} ; Rₓ, R_{y}, R_{z}) et des données de caméra associées par un horodatage lié au processus de suivi de mouvement, la base de données (660) comportant d'autres données IMU (aₓ, a_{y}, a_{z} ; Rₓ, R_{y}, R_{z}) et d'autres données de caméra associées par d'autres horodatages liés à d'autres processus de suivi de mouvement.

10. Procédé selon l'une quelconque des revendications précédentes, dans lequel le réglage de l'ensemble de paramètres d'étalonnage comporte :
la réalisation d'un réglage groupé sur l'ensemble de paramètres d'étalonnage selon un processus des moindres carrés afin de minimiser la fonction de coût.

11. Procédé selon l'une quelconque des revendications précédentes, dans lequel l'utilisation de l'ensemble de paramètres d'étalonnage dans le processus de suivi de mouvement ultérieur après la remise en service du dispositif de suivi de mouvement (100) comporte :
la génération de données IMU corrigées en compensant des erreurs IMU dans des données IMU (aₓ, a_{y}, a_{z} ; Rₓ, R_{y}, R_{z}) capturées pour le processus de suivi de mouvement ultérieur sur la base de l'ensemble de paramètres d'étalonnage ; et
la génération d'images corrigées en compensant des erreurs de caméra dans les images de caméra (210, 220) pour le processus de suivi de mouvement ultérieur sur la base de l'ensemble de paramètres d'étalonnage.

12. Procédé selon la revendication 11, dans lequel la compensation d'erreurs IMU dans des données IMU (aₓ, a_{y}, a_{z} ; Rₓ, R_{y}, R_{z}) comporte :
la détermination d'une température de l'IMU (300) ;
le calcul d'une pluralité de biais estimés sur la base de la température de l'IMU (300) ; et
la réduction de biais dans les données IMU (aₓ, a_{y}, a_{z} ; Rₓ, R_{y}, R_{z}) sur la base de la pluralité de biais estimés pour générer les données IMU corrigées.

13. Procédé selon la revendication 11 ou 12, dans lequel l'utilisation de l'ensemble de paramètres d'étalonnage dans le processus de suivi de mouvement ultérieur après la remise en service du dispositif de suivi de mouvement (100) comporte également :
le calcul d'un mouvement du dispositif de suivi de mouvement (100) sur la base des données IMU corrigées et des images corrigées ; et
l'utilisation du mouvement du dispositif de suivi de mouvement (100) pour une application de réalité augmentée.

14. Dispositif de suivi de mouvement comportant :
une unité de mesure inertielle (IMU 300) configurée pour capturer des données IMU (aₓ, a_{y}, a_{z} ; Rₓ, R_{y}, R_{z}) correspondant à une pose du dispositif de suivi de mouvement (100) ;
une caméra (110, 111) configurée pour capturer des images de caméra (210, 220) correspondant à la pose du dispositif de suivi de mouvement (100) ;
une mémoire (160) comportant une base de données (660) configurée pour stocker les données IMU (aₓ, a_{y}, a_{z} ; Rₓ, R_{y}, R_{z}) et les images de caméra (210, 220) selon un processus de suivi de mouvement, le processus de suivi de mouvement étant exécuté par le dispositif de suivi de mouvement (100) à un moment pendant que le dispositif de suivi de mouvement (100) était en cours d'utilisation ; et
un processeur (150) configuré par des instructions logicielles rappelées de la mémoire (160) pour :
détecter que le dispositif de suivi de mouvement (100) n'est pas utilisé ;
en réponse à la détection selon laquelle le dispositif de suivi de mouvement (100) n'est pas utilisé, récupérer les données IMU (aₓ, a_{y}, a_{z} ; Rₓ, R_{y}, R_{z}) et les images de caméra (210, 220) à partir de la base de données (660) et régler un ensemble de paramètres d'étalonnage pour réduire une fonction de coût sur la base d'une différence de pose entre une première pose de dispositif déterminée sur la base des données IMU (aₓ, a_{y}, a_{z} ;
Rₓ, R_{y}, R_{z}) et une seconde pose de dispositif sur la base des images de caméra (210, 220), alors que le dispositif de suivi de mouvement (100) n'est pas utilisé ; et
utiliser l'ensemble de paramètres d'étalonnage dans un processus de suivi de mouvement ultérieur après la remise en service du dispositif de suivi de mouvement (100).

15. Dispositif de suivi de mouvement selon la revendication 14 étant adapté pour réaliser le procédé selon l'une quelconque des revendications 2 à 5, 9 et 12.

16. Dispositif de suivi de mouvement selon la revendication 14 ou 15, dans lequel le processeur (150) est configuré pour réaliser le procédé selon l'une quelconque des revendications 6 à 8, 10, 11 et 13.
